# EUROPEAN PATENT APPLICATION

(11) **EP 3 089 026 A1**
(43) Veröffentlichungstag der Anmeldung: **02.11.2016**
(21) Anmeldenummer: 16156665.8
(22) Anmeldetag: 24.04.2001
(51) Int. Cl.: G06F 3/16, G06F 3/0484

(54) **VERFAHREN ZUM STEUERN EINES SYSTEMS, INSBESONDERE EINES ELEKTRISCHEN UND/ODER ELEKTRONISCHEN SYSTEMS MIT ZUMINDEST EINER ANWENDUNGSEINRICHTUNG**

(30) Priorität: 03.05.2000 DE 10021389
(62) Teilanmeldung aus: 01109965.2
(71) Anmelder: Nokia Technologies Oy, 02610 Espoo (FI)
(72) Erfinder: Theimer, Wolfgang, 44879 Bochum (DE)
(74) Vertreter: Cohausz & Florack

(57) **Zusammenfassung**

Zum Steuern eines Systems mit mehreren Anwendungseinrichtungen wird zunächst eine eingegebene Steuerinformation erfasst, wobei die erfasste Steuerinformation mindestens ein Schlüsselwort umfasst. Schlüsselwörter sind in einer Datenbank zusammen mit zugeordneten Aktivitäten gespeichert, wobei eine Aktivität mindestens eine Funktion mindestens einer der Anwendungseinrichtungen umfasst. Falls das mindestens eine Schlüsselwort in der erfassten Steuerinformation mindestens einem gespeicherten Schlüsselwort entspricht, wird eine der Anwendungseinrichtungen entsprechend der dem mindestens einen gespeicherten Schüsselwort zugeordneten Aktivität gesteuert.

## Beschreibung

Die Erfindung betrifft ein Verfahren zum Steuern eines Systems, insbesondere eines elektrischen und/oder elektronischen Systems mit zumindest einer Anwendungseinrichtung.

Zur Steuerung elektrischer und/oder elektronischer Systeme, wie beispielsweise Mobiltelefonen, Navigationssystemen, Verkehrsinformationssystemen ist es üblicherweise erforderlich, daß ein Benutzer sich durch eine mehr oder weniger aufwendige Menüstruktur arbeiten muß, um einen bestimmten Steuerbefehl einzugeben oder eine bestimmte Einstellung vorzunehmen.

Will beispielsweise ein Benutzer bei einem Mobiltelefon die Uhrzeit einstellen, so muß er zunächst aus einem Menü "Einstellungen" den Befehl "Uhr" auswählen. Anschließend werden die unter diesem Menüpunkt augebotenen Befehle angezeigt, aus denen er dann den Befehl "Uhr einstellen" auswählt, um dann die Uhrzeit einstellen zu können. Ähnlich aufwendig ist es, wenn die Lautstärke oder die Art eines Ruftons eingestellt werden soll.

Sind an einer Eingabeeinrichtung mehrere Anwendungen angeschlossen, dient also beispielsweise eine Eingabeeinrichtung gleichzeitig zur Bedienung eines Navigationssystems, eines Rundfunkempfängers und eines Mobiltelefons, so wird die Menüstruktur noch aufwendiger, und die Bedienung der einzelnen Anwendungen noch umständlicher.

Davon ausgehend liegt der Erfindung die Aufgabe zugrunde, ein Verfahren zum Steuern eines Systems bereitzustellen, daß die Benutzung des Systems für den Benutzer vereinfacht und erleichtert.

Diese Aufgabe wird durch das Verfahren nach Anspruch 1 gelöst. Vorteilhafte Weiterbildungen und Ausgestaltungen der Erfindung sind in den Unteransprüchen beschrieben.

Erfindungsgemäß ist es also vorgesehen, daß eine von einem Benutzer eingegebene Steuerinformation entsprechend zur Verfügung stehender Anwendungseinrichtungen interpretiert wird und daß dann eine Anwendungseinrichtung entsprechend dem Interpretationsergebnis gesteuert wird.

Erfindungsgemäß gibt also der Benutzer als Steuerinformation einen Steuerbefehl, z.B. "Uhr einstellen", einen Steuerbefehl zusammen mit Steuer- oder Zielparametern, z.B. "Navigation; Bochum; Meesmannstr.; 103", oder Steuer- oder Zielparameter, z.B. "Lauter", "WDR2" oder "Müller" ein. Ist die eingegebene Steuerinformation wie im Falle von "WDR2" bzw. "Navigation; Bochum; Meesmannstr.; 103" vollständig, so wird die entsprechende Anwendungseinrichtung, also das Rundfunkgerät bzw. das Navigationssystem entsprechend gesteuert. Ist die Steuerinformation eindeutig aber unvollständig, wie bei "Uhr einstellen" so wird der Benutzer aufgefordert, die erforderlichen Einstellparameter einzugeben. Ist die Steuerinformation mehrdeutig, wie im Falle "Lauter" oder "Müller", weil die eingegebene Steuerinformation von mehreren Anwendungen sinnvoll verarbeitet werden kann, so wird der Benutzer zu einer entsprechenden Ergänzung aufgefordert, wobei er gegebenenfalls über die zur Verfügung stehenden Möglichkeiten der Eingabeinterpretation unterrichtet wird.

Erfindungsgemäß löst sich also das Verfahren zum Steuern eines Systems von einer fest vorgegebenen Menüstruktur und berücksichtigt menschliche Denkstrukturen, bei denen stets als erstes der Wunsch - z.B. "Ich möchte die Musik lauter hören" auftritt und dann anschließend erst der Weg zu diesem Ziel - den Lautstärkeregler am Rundfunkempfänger auf "lauter" einstellen - gedacht wird. Das erfindungsgemäße Verfahren ermöglicht es dem Benutzer somit seinen Einstell- oder Steuerwunsch in das System einzugeben, das daraufhin selbsttätig den Weg zur Realisierung dieses Einstell- oder Steuerwunsches feststellt und ausführt.

Um Fehlerkennungen der Benutzereingabe zu verhindern, ist bei einer vorteilhaften Ausgestaltung der Erfindung vorgesehen, daß die von einem Benutzer eingegebene Steuerinformation dem Benutzer zur Bestätigung als Ansage oder Anzeige zurückgemeldet wird, wobei eingegebene Steuerinformation, die mehrere Möglichkeiten zur Interpretation zuläßt, als Auswahlliste dargestellt wird.

Durch die erfindungsgemäß vorgesehene Rückmeldung der Benutzereingabe wird einerseits sichergestellt, daß die eingegebene Information richtig erkannt wurde, andererseits läßt sich zusammen mit der Rückmeldung des mehrdeutigen Einstellbefehls "lauter" auch gleichzeitig abfragen, welche Funktion "lauter" gestellt werden soll, indem zusätzlich zu diesem Befehl auch die möglichen lauterzustellenden Funktionen angegeben werden, also z.B. "Rufton lauter", "Verkehrsinformationmeldungen lauter", "Rundfunkwiedergabe lauter", "Warntöne lauter", und dergleichen.

Dabei ist es besonders zweckmäßig, wenn eingegebene Steuerinformation, die nicht zuverlässig interpretiertbar ist, bei der Rückmeldung entsprechend markiert wird.

Eine andere Weiterbildung der Erfindung zeichnet sich dadurch aus, daß überprüft wird, ob die Steuerinformation vollständig ist, um eine angeforderte Aktion ausführen zu können, und daß der Benutzer zur Vervollständigung der Steuerinformation aufgefordert wird, falls dies nicht der Fall ist.

Bei einer vorteilhaften Ausgestaltung der Erfindung ist vorgesehen, daß die als Schlüsselwort oder Schlüsselwörter eingegebene Steuerinformation zur Interpretation mit gespeicherten Schlüsselwörtern verglichen wird, wobei als Steuerinformation die zur Verfügung stehenden Anwendungseinrichtungen, Steuerbefehle und Steuerparameter gespeichert sind. Die Steuerparameter sind dabei zweckmäßigerweise als Listen gespeichert.

Das erfindungsgemäße Verfahren greift also auf eine Steuerinformationsdatenbank zurück, in der die einzelnen möglichen Funktionen des Systems, die durch die einzelnen Anwendungseinrichtungen bestimmt werden, jeweils als komplette Datensätze gespeichert sind. Beispielsweise umfaßt der Datensatz mit der Steuerinformation "WDR2" auch die Anwendung "Rundfunkempfänger", und den Hinweis "Sender einstellen".

Besonders zweckmäßig ist es, wenn Steuerbefehle als Datensätze zusammen mit Platzhaltern für die betroffenen Anwendungseinrichtungen und die jeweils zur Befehlsausführung benötigten Steuerparameter gespeichert sind.

Die Erfindung wird im folgenden beispielsweise anhand der Zeichnung näher erläutert. Es zeigen:
Figur 1 ein schematisches Blockschaltbild eines elektronischen Systems mit einer Mehrzahl von Anwendungseinrichtungen, das mit dem erfindungsgemäßen Verfahren steuerbar ist,
Figur 2 ein Beispiel einer optischen Rückmeldung auf einem Bildschirm, und
Figur 3 ein vereinfachtes schematisches Blockdiagramm zur Veranschaulichung des erfindungsgemäßen Verfahrens.

In den verschiedenen Figuren der Zeichnung sind einander entsprechende Elemente mit gleichen Bezugszeichen versehen.

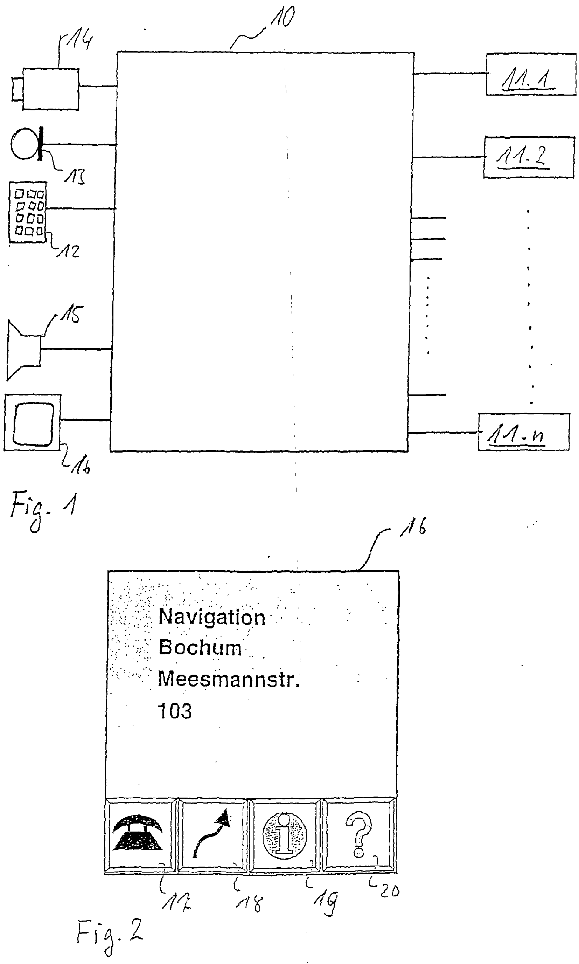

Wie in Figur 1 rein schematisch dargestellt ist, umfaßt ein elektrisches und/oder elektronisches System eine Benutzerschnittstelle 10 an die eine oder mehrere Anwendungseinrichtungen 11.1, 11.2,...11.n angeschlossen sind. Als Anwendungseinrichtungen 11.i können dabei ein Navigationssystem, ein Mobiltelefon, eine Verkehrsinformationseinheit, ein Rundfunkempfänger, ein CD-Spieler, ein Kassettenrecorder und dergleichen vorgesehen sein.

Um Steuerinformationen für die einzelnen Anwendungseinrichtungen 11.i eingeben zu können, sind an die Benutzerschnittstelle 10 beispielsweise eine Tastatur 12, ein Mikrofon 13 und/oder eine Videokamera 14 angeschlossen, so daß Informationen als Zeichenfolge über die Tastatur 12, als gesprochene Befehle über das Mikrofon 13 oder als Gesten über die Videokamera 14 eingegeben werden können. Die Tastatur 12 kann dabei neben Einzeltasten mit einfacher oder mehrfacher Zeichenbelegung auch Drehdrücksteller zur Auswahl und Eingabe von Zeichen und/oder Begriffen aus Listen oder sogenannte soft-keys, also Stellelemente, denen je nach Anwendung unterschiedliche Eingabefunktionen zugewiesen werden können, vorgesehen sein.

Um Informationen an den Benutzer ausgeben zu können, sind beispielsweise ein Lautsprecher 15 und/oder ein Bildschirm 16 an die Benutzerschnittstelle 10 angeschlossen. Der Bildschirm 16 kann dabei zumindest teilweise als sogenannter Touchscreen ausgebildet sein, der eine Reihe von Schaltflächen 17, 18, 19, 20 umfaßt, die bei Berührung die Funktion von herkömmlichen Tasten übernehmen, wobei den Schaltflächen 17, 18, 19, 20 je nach aktivierter Anwendung unterschiedliche Funktionen zugeordnet sein können.

Bei dem in Figur 2 dargestellten Bildschirm 16 dienen die Schaltflächen 17, 18, 19 bzw. 20 zum Aktivieren eines Mobiltelefons, eines Navigationssystems, einer Verkehrsinformationseinheit bzw. einer Hilfefunktion.

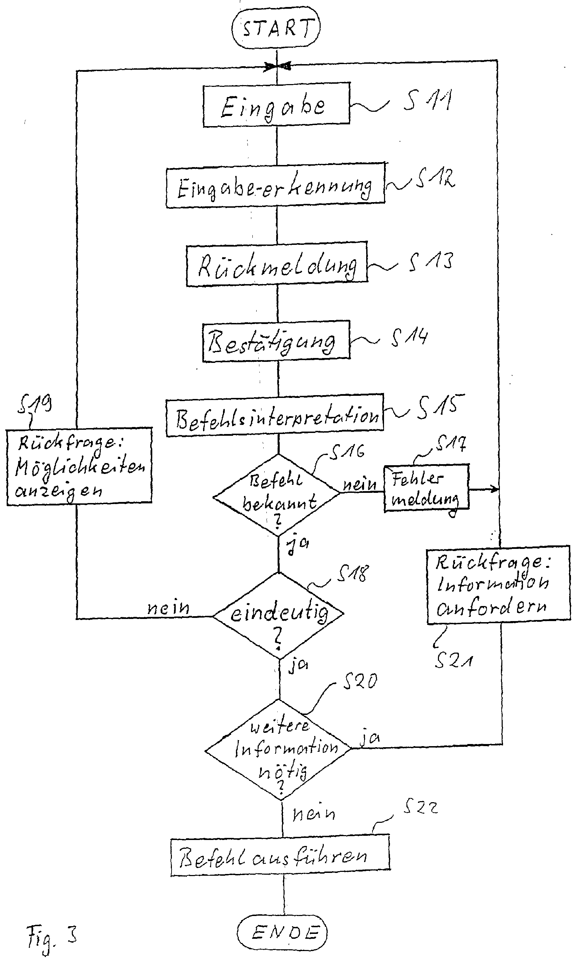

Wie in Figur 3 dargestellt ist, wird zum Steuern des eingeschalteten Systems zunächst im Schritt S 11 vom Benutzer eine Steuerinformation eingegeben, die aus einem einzelnen Steuerbefehl oder Steuerparameter, aus einer Zieleingabe oder einer Kombination davon bestehen. Zweckmäßigerweise erfolgt die Eingabe von Steuerinformationen in Form von Schlüsselwörtern, die in einer entsprechenden Datenbank der Benutzerschnittstelle zusammen mit den zugeordneten Aktivitäten gespeichert sind.

Nach der Eingabe der Steuerinformation in Schritt S11 wir im Schritt S12 zunächst eine Eingabeerkennung durchgeführt um dann im Schritt S13 eine akustische oder optische Rückmeldung auszugeben, mit der der Benutzer gleichzeitig aufgefordert wird, seine Eingabe im Schritt S14 zu bestätigen. Wurde bei der Eingabeerkennung im Schritt S12 die Eingabe nicht mit völliger Sicherheit erkannt, so kann zusammen mit der Rückmeldung eine Angabe über die Zuverlässigkeit der Eingabeerkennung und/oder eine Liste von möglicherweise erkannten Schlüsselwörtern ausgegeben werden.

Die Zuverlässigkeit der Eingabeerkennung kann dabei durch Farben, z.B. grün, gelb, rot für sicher, wahrscheinlich, unsicher, oder durch ein sogenanntes Magisches Auge, das durch die Größe einer darin hervorgehobenen Fläche die Zuverlässigkeit der Eingabeerkennung veranschaulicht, oder durch eine Kombination dieser Möglichkeiten angezeigt werden. Beim Magischen Auge kann z.B. eine unsichere Eingabeerkennung durch eine rote Kreisfläche angezeigt werden, deren Farbe mit zunehmender Erkennungszuverlässigkeit über orange nach gelb und weiter nach grün wechselt, während sich die Fläche als solche vom Kreis über eine Ellipse oder einen Kreisausschnitt zu einem Strich oder einer Art Ausrufezeichen hin ändert.

Der Benutzer hat dann die Möglichkeit beim Bestätigen im Schritt S14 die Eingabe zu verwerfen oder, falls eine Liste von Schlüsselwörtern ausgegeben wurde, aus dieser die gewünschte Eingabe auszuwählen und zu bestätigen.

Wurde die Eingabe im Schritt S14 bestätigt, so erfolgt im Schritt S15 eine Befehlsinterpretation, wozu das oder die eingegebenen Schlüsselwörter mit den in der Datenbank der Benutzerschnittstelle 10 gespeicherten Schlüsselwörtern verglichen wird.

Es ist aber auch möglich, nach der Eingabeerkennung im Schritt S 12 direkt zur Eingabeinterpretation in Schritt S15 weiter zu gehen, um die Rückmeldung und Bestätigung später durchzuführen.

Im Schritt S 16 wird dann zunächst festgestellt, ob das eingegebene Schlüsselwort bzw. der eingegebene Befehl bekannt ist. Falls dies nicht der Fall ist, erfolgt im Schritt S17 eine Fehlermeldung und das Verfahren kehrt zum Schritt S 11 zurück. Ist der Befehl bekannt, so wird als nächstes im Schritt S18 überprüft, ob der Befehl eindeutig ist, es wird also festgestellt, ob ein bekannter Befehl nur in einer oder auch in mehreren Anwendungen ausführbar ist, und ob er in einer Anwendung auch mehreren Funktionen zugeordnet ist. Ist dies der Fall, ist der Befehl also nicht eindeutig, so wird im Schritt S19 eine Rückfrage an den Benutzer ausgegeben, bei der gleichzeitig die möglichen Funktionen angezeigt werden, auf dieder Befehl anwendbar ist.

Hierbei ist gegebenenfalls eine Anzeigehierarchie zu berücksichtigen, um den Benutzer bei der Eingabe zu unterstützen und nicht zu verwirren. Ist ein Steuerbefehl auf mehrere Anwendungen und innerhalb einer oder mehrerer Anwendungen auf mehrere Funktionen anwendbar, so ist es zweckmäßig, zuerst die Anwendung und danach in einem weiteren Auswahlschritt die gewünschte zu steuernde Funktion auswählen zu lassen.

Ist der eingegebene Befehl bzw. die eingegebene Steuerinformation eindeutig, so wird im Schritt S20 überprüft, ob weitere Informationen erforderlich sind, um den Befehl auszuführen. Ist dies der Fall, so wird im Schritt S21 eine entsprechende Rückfrage an den Benutzer ausgegeben, um die zusätzlich benötigte Information anzufordern. Wird keine weitere Information benötigt, so wird im Schritt S22 der Befehl ausgeführt.

Wird, wie oben angedeutet, unmittelbar nach der Eingabeerkennung im Schritt S 12 die Befehlsinterpretation im Schritt S 15 durchgeführt, um anschließend zu überprüfen, ob der Befehl bekannt (Schritt S16), eindeutig (Schritt S18) und vollständig (Schritt S20) ist, so kann daran anschließend eine Rückmeldung entsprechend Schritt S 13 erfolgen, um zu einer Bestätigung der Eingabe und/oder zur Eingabe weiterer Möglichkeiten bzw. Informationen aufzufordern.

Das erfindungsgemäße Verfahren zum Steuern eines Systems wird nun anhand von speziellen Beispielen näher erläutert.

Umfaßt das System als Anwendungseinrichtungen 11.i einen Rundfunkempfänger und wünscht ein Benutzer einen bestimmten Sender, z.B. "WDR2" zu hören, so kann er beispielsweise als Steuerinformation "WDR2" eingeben. Nachdem der Benutzer dann auf die Rückmeldung im Schritt S 13 die korrekte Eingabeerkennung im Schritt S 14 bestätigt hat, werden in der Befehls- oder Schlüsselwortdatenbank zum Schlüsselwort "WDR2" die Befehle "Rundfunkempfänger einschalten" und "Sender WDR2 einstellen" ermittelt. Da sich das als Steuerinformation eingegebene Schlüsselwort "WDR2" nur einer Anwendungseinrichtung, nämlich dem Rundfunkempfänger, zuordnen läßt und auch innerhalb dieser Anwendungseinrichtung nur einer Funktion, nämlich der Senderauswahl, zugeordnet werden kann und dabei nur einen einzigen Sender bezeichnet, ist die Steuerinformation eindeutig und vollständig, so daß der bzw. die entsprechenden Befehle im Schritt S22 ohne weitere Rückfragen ausgeführt werden können.

Umfaßt das System neben einem Navigationssystem, dem ein Adreßbuch zugeordnet ist, auch ein Mobiltelefon mit einem entsprechenden Telefonbuch, so kann beispielsweise als Steuerinformation auch ein im Adreß- und/oder Telefonbuch gespeicherter Name eingegeben werden. Wird also beispielsweise als Steuerinformation der Name "Müller" eingegeben, so erkennt beispielsweise das System im Schritt S 12 nicht nur den Namen "Müller", sondern auch die Namen "Möller" und "Mehler", die dann im Schritt S 13 auf dem Bildschirm angezeigt werden. Der Benutzer kann nun im Schritt S14 aus den angezeigten Namen den gewünschten auswählen und bestätigen.

Bei der Befehlsinterpretation im Schritt S15 wird beispielsweise festgestellt, daß dem Namen "Müller" sowohl eine Adresse im Adreßbuch als auch eine Telefonnummer im Telefonbuch zugeordnet ist. Das System erkennt somit, daß entweder eine Telefonverbindung zu "Müller" vom Mobiltelefon aufgebaut oder daß eine Routenführung zur Wohnung oder zum Büro von "Müller" vom Navigationssystem durchgeführt werden soll. Die aus der Steuerinformation ableitbaren Steuerbefehle sind also nicht eindeutig, so daß im Schritt S 19 abgefragt wird, welche Anwendung gestartet werden soll. Sind im Telefonbuch unter "Müller" mehrere Telefonnummern gespeichert oder im Adreßbuch mehrere Adressen, so ist auch nach Auswahl der Anwendung, also nach Auswahl des Mobiltelefons oder des Navigationssystems die Steuereingabe immer noch nicht vollständig, so daß eine weitere Rückfrage erforderlich ist.

Sobald die Befehlsinformation eindeutig ist, wenn also beispielsweise klar ist, daß eine Routenführung zum Büro von "Müller" gewünscht wird, wird das Navigationssystem im Schritt S22 gestartet und als Zieladresse wird die Büroadresse von "Müller" aus dem Adreßbuch verwendet.

Eine weitere Eingabemöglichkeit besteht darin, daß beispielsweise als Schlüsselwörter "Navigation", "Bochum", "Meesmannstr" und "103" eingegeben werden, daß also sowohl die gewünschte Anwendung als auch die von der Anwendung benötigten Steuerparameter in einer vorgegebenen Folge als Schlüsselwörter eingegeben werden. Hierfür ist in der Datenbank das Schlüsselwort "Navigation" so gespeichert, daß ihm Platzhalter für die Adresse zugeordnet sind, nämlich <Stadt>, <Straße>, <Hausnummer>. Um auf eine derartig strukturierte Eingabe von Steuerinformationen verzichten zu können, kann auch die Möglichkeit vorgesehen sein, daß den die Adresse darstellenden Schlüsselwörtern jeweils die entsprechenden Platzhalter vorangestellt werden, so daß die Adresse in beliebiger Reihenfolge eingegeben werden kann. In diesem Falle kann die Steuerinformation beispielsweise in folgender Form eingegeben werden:
"Navigation" "Straße" "Meesmannstr." "Stadt" "Bochum".

Sobald also insbesondere beim Navigationssystem einem eingegebenen Schlüsselwort ein dessen Bedeutung erläuterndes Schlüsselwort voran oder nachgestellt wird, kann auf eine starre Eingabestruktur verzichtet werden, die zweckmäßig ist, wenn die einzelnen Schlüsselwörter nicht erläutert werden.

Eine weitere Möglichkeit zur Steuerung des Systems besteht beispielsweise darin, daß bei einer aktiven Anwendung, also beispielsweise bei eingeschaltedem Rundfunkempfänger auf die Eingabe des Schlüsselwortes "lauter" hin die Widergabelautstärke erhöht wird. Hierbei wird, obwohl das Schlüsselwort "lauter" keinen eindeutigen Befehl festlegt, der Einfachheit halber vorausgesetzt, daß nur die aktive Anwendung gemeint sein kann, wenn keine weitere Zusatzinformation eingegeben wird.

Sind jedoch beispielsweise zwei Anwendungen gleichzeitig aktiv, beispielsweise der Rundfunkempfänger und das Navigationssystem, das neben einer optischen Routenführungsinformation auf dem Bildschirm 16 auch Fahrtrichtungshinweise ansagt, so ist der aus dem Schlüsselwort "lauter" abgeleitete Befehl Widergabe- oder Ansagelautstärke erhöhen nicht mehr eindeutig, so daß im Schritt S18 zum Schritt S19 verzweigt wird, um den Benutzer zur Eingabe weiterer Informationen aufzufordern, so daß klar wird, ob er lauter Radio hören will, oder ob er die Ansagelautstärke der Routenführungshinweise lauter haben will, um diese trotz Radiohörens klar zu erkennen.

Das erfindungsgemäße Verfahren zum Steuern eines Systems ermöglicht es somit einem Benutzer die verschiedenen Anwendungseinrichtungen des Systems unmittelbar zu steuern und einzustellen, ohne sich durch ein langwieriges hierarchisches Menü zu arbeiten, da aufgrund der eingegebenen Steuerinformation, die dazugehörige Anwendung und Funktion aus einer Steuerbefehlsdatenbank vom System selbst herausgesucht werden.

## Patentansprüche

1. Verfahren zum Steuern eines Systems mit mehreren Anwendungseinrichtungen, wobei das Verfahren folgendes umfasst:
- Erfassen einer eingegebenen Steuerinformation, wobei die erfasste Steuerinformation mindestens ein Schlüsselwort umfasst, wobei Schlüsselwörter in einer Datenbank zusammen mit zugeordneten Aktivitäten gespeichert sind, und wobei eine Aktivität mindestens eine Funktion mindestens einer der Anwendungseinrichtungen umfasst;
- Bestimmen, ob das mindestens eine Schlüsselwort in der erfassten Steuerinformation mindestens einem gespeicherten Schlüsselwort entspricht;
und
- falls das mindestens eine Schlüsselwort in der erfassten Steuerinformation mindestens einem gespeicherten Schlüsselwort entspricht, Steuern einer der Anwendungseinrichtungen entsprechend der dem mindestens einen gespeicherten Schüsselwort zugeordneten Aktivität.

2. Verfahren nach Anspruch 1, wobei die gespeicherten Schlüsselwörter Anwendungseinrichtungen, Steuerbefehle und/oder Steuerparameter umfassen.

3. Verfahren nach Anspruch 1 oder 2, wobei die den gespeicherten Schlüsselwörtern zugeordneten Aktivitäten Funktionen einer Mehrzahl der Anwendungseinrichtungen umfassen.

4. Verfahren nach einem der Ansprüche 1 bis 3, wobei in dem System Steuerinformationen für die mehreren Anwendungseinrichtungen über eine Mehrzahl von Vorrichtungen eingebbar sind.

5. Verfahren nach einem der Ansprüche 1 bis 4, wobei die erfasste Steuerinformation einen gesprochenen Befehl umfasst.

6. Verfahren nach einem der Ansprüche 1 bis 5, wobei die Datenbank derart ausgebildet ist, dass die gespeicherten Aktivitäten mehrere Funktionen einer jeweiligen Anwendungseinrichtung umfassen können.

7. Verfahren nach einem der Ansprüche 1 bis 6, wobei für die Steuerung mindestens einer der Anwendungseinrichtungen ein aktueller Status der Anwendungseinrichtung berücksichtigt wird, wobei der Status angibt, ob eine Anwendung der Anwendungseinrichtungen aktiv ist.

8. Verfahren nach einem der Ansprüche 1 bis 7, wobei das System eine Datenbank umfasst, in der Schlüsselwörter zusammen mit zugeordneten Aktivitäten gespeichert sind, wobei die Datenbank außerhalb mindestens einer Vorrichtung, über die Steuerinformationen eingebbar sind, eingerichtet ist.

9. System mit Mitteln zum Ausführen des Verfahrens nach einem der Ansprüche 1 bis 8.

10. Benutzerschnittstelle mit Mitteln zum Ausführen des Verfahrens nach einem der Ansprüche 1 bis 8.
